# EUROPÄISCHE PATENTSCHRIFT

(11) **EP 1 891 117 B1**
(45) Veröffentlichungstag und Bekanntmachung des Hinweises auf die Patenterteilung: **16.11.2011**
(21) Anmeldenummer: 06706561.5
(22) Anmeldetag: 01.02.2006
(51) Int. Cl.: C08B 31/06

(54) **VERFAHREN ZUR HERSTELLUNG VON STÄRKEPHOSPHATEN UND DEREN VERWENDUNG**
METHOD FOR THE PRODUCTION OF STARCH PHOSPHATES AND THEIR USE
PROCEDE POUR LA PREPARATION DES PHOSPHATES D'AMIDON ET LEUR UTILISATION

(30) Priorität: 01.02.2005 DE 102005004600
(43) Veröffentlichungstag der Anmeldung: 27.02.2008
(73) Patentinhaber: Fraunhofer-Gesellschaft zur Förderung der angewandten Forschung e.V., 80686 München (DE); Dow Global Technologies LLC, Midland, MI 48674 (US)
(72) Erfinder: VOLKERT, Bert, 14167 Berlin (DE); FISCHER, Steffen, 01705 Freital/OT Wurgwitz (DE); LOTH, Fritz, 14513 Teltow (DE); LANGER, Benedikt, 28857 Syke (DE); ENGELHARDT, Jürgen, 29683 Bad Fallingsbostel (DE)
(74) Vertreter: Pfenning, Meinig & Partner GbR
(86) Internationale Anmeldenummer: PCT/EP2006/000886
(87) Internationale Veröffentlichungsnummer: WO 2006/082044

(56) Entgegenhaltungen:
- DE-C- 851 180
- DE-C1- 19 859 123
- GB-A- 968 427
- MARUSZA K ET AL: "HIGHLY PHOSPHORYLATED STARCH" STARKE - STARCH, WILEY-VCH VERLAG, WEINHEIM, DE, Bd. 43, Nr. 2, 1. Februar 1991 (1991-02-01), Seiten 66-69, XP000202132 ISSN: 0038-9056 in der Anmeldung erwähnt

## Beschreibung

Die Erfindung betrifft ein Verfahren zur Herstellung von hochsubstituierten Stärkephosphaten mit geringem Carbamatgruppengehalt. Der hohe Substitutionsgrad hinsichtlich der Phosphatgruppen bei gleichzeitig niedrigen Substitutionsgraden der Carbamatgruppen kann durch einen besonderen Vorbehandlungsschritt erreicht werden.

Ein typisches Verfahren zur Herstellung von Stärkemonophosphaten ist die Umsetzung der Stärke nach dem sog. Neukom-Verfahren (US 2,884,412). Dabei wird die Stärke zunächst in einer wässrigen Lösung von Alkaliphosphat suspendiert. Die somit imprägnierte Stärke wird filtriert, an der Luft oder im Trockenschrank bei Temperaturen unterhalb der Verkleisterungstemperatur vorgetrocknet und anschließend bei Temperaturen um 140 °C (± 30 °C) getempert. Die entstehenden Produkte haben DS-Werte < 0,1 und weisen meist eine bräunliche Verfärbung auf. Diese Verfärbung kann, wie in DE 2 114 305 beschrieben, durch eine intensive Vermischung bei 40 bis 70 °C während der Vorbehandlung unterdrückt werden. Durch diese Vorbehandlung ist für die Veresterung eine niedrige Temperatur und eine kürzere Reaktionszeit notwendig. Außerdem wird der Mischung Harnstoff als Veresterungshilfsmittel hinzugesetzt. Um Stärkephosphate mit erhöhten Viskositäten zu erhalten, ist eine wie in DE 1 212 010 beschriebene Fraktionierung erforderlich. Während die Produkte, hergestellt nach dem modifizierten Neukom-Verfahren, DS-Werte bis -0,2 aufweisen, werden in DE 19 859 123 Stärkephosphate mit Substitutionsgraden bis 1,0 beansprucht. Danach wird die Stärke mit dem Phosphatierungsmittel und Harnstoff bei 90 bis 140 °C im Vakuum (≤ 100 Torr) ohne weitere Durchmischung getempert. Es entstehen Produkte mit Substitutiongraden der Carbamatgruppen und der Phosphatestergruppen jeweils im Bereich von 0,1 bis 1.

In Towle und Whistler, Methods Carbohydr. Chem 6, (1972), 408-410 werden Stärkephosphate mit DS bis zu 1,75 beschrieben. Dabei wird die Stärke in einem homogenen Verfahren in DMF als Lösungsmittel mit Tetrapolyphosphorsäure in Gegenwart von tri-Butylamin umgesetzt. Ebenfalls hohe Substitutionsgrade (bis DS = 1) werden in Tomasik et al., (Starch/(Stärke) 43/2 (1991) 66-69 durch eine heterogene Reaktionsführung im Slurry-Verfahren erreicht. In einem Gemisch aus Benzol und Phosphorsäureanhydrid wird die Stärke bei 80 °C umgesetzt. Es entstehen aber bevorzugt vernetzte Produkte.

Weiterhin offenbaren GB 968 427 A sowie Marusza K. et al.: "HIGHLY PHOSPHORYLATED STARCH", STÄRKE-STARCH, Wiley-VCH-Verlag, Weinheim, DE, Bd. 43, Nr. 2, 1. Februar 1991, S. 66-69, XP000202132, ISSN: 0038-9056, hochsubstituierte Stärkephosphate.

Die DE 851 180 C und DE 198 59 123 Cl beschreiben Verfahren zur Herstellung von Stärkephosphaten, wobei die Stärke gleichzeitig mit Harnstoff und einem Phosphatierungsmittel umgesetzt wird.

Für die Herstellung von hochsubstituierten Stärke-phosphaten mit Polyelektrolyteigenschaften ist es wünschenswert, Produkte mit möglichst geringem Anteil an Vernetzungen zu erhalten. Unter ökonomischen und ökologischen Gesichtspunkten ist die Herstellung solcher Derivate nach dem von Towle und Whistler beschriebenen Verfahren nicht effektiv.

Bisherige Verfahren zur Herstellung von hochsubstituierten Stärkephosphaten mit einem DS < 1,0 sind an die Verwendung von Lösungsmitteln gekoppelt. Verfahren ohne Lösungsmittel erreichen DS-Werte bis 1,0, wobei gleichzeitig ein hoher Anteil an Carbamatgruppen gebunden ist (DS_{Carb}. 0, 1 bis 1, 0).

Ausgehend hiervon war es Aufgabe der vorliegenden Erfindung, ein Verfahren bereitzustellen, das einen hohen Substitutionsgrad hinsichtlich der Phosphatgruppen bei gleichzeitig niedrigem Substitutionsgrad der Carbamatgruppen ermöglicht, wobei gleichzeitig eine einfache und damit wirtschaftliche Verfahrensführung ermöglicht werden soll.

Diese Aufgabe wird durch das Verfahren mit den Merkmalen das Anspruchs 1 und das Stärkephosphat mit den Merkmalen des Anspruchs 9 gelöst. Die weiteren abhängigen Ansprüche zeigen vorteilhafte Weiterbildungen auf. In den Ansprüchen 12 bis 16 werden Verwendungen der erfindungsgemäßen Stärkephosphate genannt.

Erfindungsgemäß wird ein Verfahren zur Herstellung hochsubstituierter Stärkephosphate bereitgestellt, das auf den folgenden Verfahrensschritten beruht:
a) in einem Vorbehandlungsschritt die Stärke in einem Gemisch aus Harnstoff und Wasser aufgelöst wird,
b) das Wasser aus der Lösung von a) unter Erhalt einer modifizierten Stärke entfernt wird und
c) in einem Mischaggregat die modifizierte Stärke mit einem Phosphatierungsmittel in einem lösungsmittelfreien Schritt zum Stärkephosphat thermisch umgesetzt wird.

Die Anwendung von hochsubstituierten Stärkephosphaten unter basischen Bedingungen macht es notwendig, dass die Produkte möglichst gering mit Carbamatgruppen substituiert sind, da diese sonst unter Abgabe von geruchsintensivem Ammoniak abgespalten werden.

Überraschenderweise konnte gezeigt werden, dass mit der erfindungsgemäßen Verfahrensführung nun gleichmäßig substituierte Stärkephosphate mit Substitutionsgraden hinsichtlich der Phosphatgruppen im Bereich von 0,01 bis 2, bevorzugt von 0,5 bis 1,55, und Substitutionsgraden an Carbamatgruppen unter 0,1 erreicht werden können.

Vorzugsweise wird in dem Vorbehandlungsschritt die Stärke in einem Harnstoff-Wasser-Gemisch gelöst, das bevorzugt einen Gehalt an Harnstoff von 30 bis 60 Gew.-% und besonders bevorzugt von 45 bis 55 Gew.-% aufweist.

Die Abtrennung des Wassers in Schritt b) kann durch beliebige aus dem Stand der Technik bekannte Methoden erfolgen. Bevorzugt ist hier eine azeotrope Destillation mit einem Alkohol, z.B. 2-Propanol.

Hinsichtlich der Vermischung der modifizierten Stärke mit dem Phosphatierungsmittel bestehen zwei grundsätzliche Verfahrensvarianten. Die erste Variante basiert darauf, dass die modifizierte Stärke zu einer Schmelze des Phosphatierungsmittels gegeben wird. Eine weitere bevorzugte Variante sieht vor, dass die modifizierte Stärke und das Phosphatierungsmittel bei Raumtemperatur zunächst gemischt werden. Hierbei ist es nicht zwingend erforderlich, dass die Vermischung bei Raumtemperatur erfolgt, sondern es ist ein Temperaturfenster von 10 bis 60 °C möglich. Nach der Vermischung erfolgt dann die gemeinsame Aufheizung auf Temperaturen im Bereich von vorzugsweise 100 bis 150 °C, besonders bevorzugt von 120 °C.

Als Phosphatierungsmittel kommen vorzugsweise Phosphatsalze in Betracht. Besonders bevorzugt werden hier Phosphorsäure und/oder Harnstoffphosphat eingesetzt.

Die apparativen Vorgaben hinsichtlich der Vermischung der modifizierten Stärke mit dem Phosphatierungsmittel sind nicht beschränkt, sodass alle aus dem Stand der Technik bekannten Mischaggregate Einsatz finden können. Besonders bevorzugt ist jedoch die Verwendung eines Kneters.

Nach dem erfindungsgemäßen Verfahren resultieren Stärkephosphate mit einem Substitutionsgrad an Phosphatgruppen von 0,01 bis 2 und einem Gehalt an Carbamatgruppen von ≤ 0,1 bereitgestellt. Bevorzugt beträgt der Substitutionsgrad an Phosphatgruppen von 0,5 bis 1,5.

Überraschend wurde gefunden, dass eine Vorbehandlung der Stärke in einem Harnstoff-Wasser-Gemisch mit anschließendem Wasserentzug und folgender thermischer Umsetzung in Gegenwart eines Phosphates Produkte liefert, die einen hohen Substitutionsgrad an gebunden Phosphatgruppen besitzen, wobei die Phosphorgehalte dieser Gruppen bis 16 % betragen. Die gebunden Phosphatgruppen setzen sich aus Mono-, Di- und Triphosphatestern zusammen, wobei der Hauptanteil aus Monophosphat besteht. Weiterhin besitzen die Produkte einen geringen Anteil von Carbamatgruppen DS_{Carb}. ≤ 0,1.

Durch die Vorbehandlung wird die Zugänglichkeit für das Reagenz verbessert und es entstehen Produkte mit einer gleichmäßigeren Verteilung der Substituenten entlang der Kette.

Die Produkte sind weiß bis leicht gelblich, zeigen 2%ige wässrige Lösung verdickende Eigenschaften und Polyelektrolytkomplexbildung mit entsprechend positiv geladenen Polymeren, wie beispielsweise Poly(diallyl-dimethylammonium)chlorid. Die erfindungsgemäßen Stärkephosphate zeichnen sich durch ein hohes Wasserrückhaltevermögen aus.

Diese Stärkephosphate sind nach dem Verfahren nach einem der Ansprüche 1 bis 8 herstellbar.

Verwendung findet das erfindungsgemäße Verfahren u.a. im Baustoffsektor, beispielsweise als Additiv in mineralischen oder dispersionsgebundenen Baustoffsystemen, wo sie zur Einstellung der Rheologie und/oder der Wasserrückhaltung eingesetzt werden können. Eine weitere Verwendung ist die als Additiv in der Pharmazie und der Kosmetik. Weitere Anwendungsfelder betreffen die Verwendung als anionische Komponente für Polyelektrolytkomplexe. Ebenso können die erfindungsgemäßen Stärkephosphate als Trägermaterial, insbesondere in der Landwirtschaft, eingesetzt werden. Anhand der nachfolgenden Beispiele soll der erfindungsgemäße Gegenstand näher erläutert werden, ohne diesen auf die hier genannten speziellen Ausführungsformen zu beschränken.

### Beispiel 1

45,2 g Kartoffelstärke mit einem Trockengehalt von 82,5 % werden in einer Lösung aus 76 g Harnstoff in 78 g Wasser 1 h bei 25 °C gerührt. Anschließend werden 2/2-Propanol hinzu gegeben, die zusammen mit Wasser bei 60 °C/200 mbar als Azeotrop abdestilliert werden. Das Zwischenprodukt wird bis zu einem Trockengehalt von 95 bis 99 % bei 60 °C/45 mbar getrocknet und in einem Kneter mit 65,4 g geschmolzenem Harnstoffphosphat bei 120 °C umgesetzt. Nach 2 h liegt das Produkt als weißes Pulver vor. Nach Reinigung ergibt sich ein Produkt mit einem an der Stärke gebundenen Phosphorgehalt von 6,2 % was einem Substitutionsgrad DS_{Phosphat} = 0,42 entspricht. Der Gehalt an Carbamatgruppen beträgt DS_{Carbamat} = 0,08. Eine wässrige Lösung ist trübe und zeigt verdickende Eigenschaften.

### Beispiel 2

33,9 g Kartoffelstärke mit einem Trockengehalt von 82,5 % werden in einer Lösung aus 57 g Harnstoff und 59 g Wasser 1 h bei 25 °C gerührt. Anschließend werden 500 ml 2-Propanol hinzu gegeben, die zusammen mit Wasser bei 60 °C/200 mbar als Azeotrop abdestilliert werden. Das Zwischenprodukt wird bis zu einem Trockengehalt von 95 bis 99 % bei 60 °C/45 mbar getrocknet und in einem Kneter mit 98,1 g geschmolzenem Harnstoffphosphat bei 120 °C umgesetzt. Nach 2 h wird das Produkt in Wasser gelöst und gereinigt. Es ergibt sich ein Produkt mit einem an der Stärke gebundenen Phosphorgehalt von 11,8 %. Daraus ergibt sich ein Substitutionsgrad DS_{Phospnat} = 1,08. Der Gehalt an Carbamatgruppen beträgt DS_{Carbamat} = 0,02. Eine 2%ige wässrige Lösung ist leicht trübe und zeigt mit Poly(dadmac) einen deutlich flockigen Niederschlag.

### Beispiel 3

24,6 g Kartoffelstärke mit einem Trockengehalt von 82,5 % werden in einer Lösung aus 41,4 g Harnstoff in Wasser 1 h bei 25 °C gerührt. Anschließend werden 730 ml 2,5/2-Propanol hinzu gegeben, die zusammen mit Wasser bei 60 °C/200 mbar als Azeotrop abdestilliert werden. Das Zwischenprodukt wird bis zu einem Trockengehalt von 95 bis 99 % bei 60 °C/45 mbar getrocknet und in einem Kneter mit 65,4 g geschmolzenem Harnstoffphosphat bei 120 °C umgesetzt. Nach 2 h wird das Rohprodukt in Wasser gelöst und gereinigt. Es ergibt sich ein Produkt mit einem an der Stärke gebunden Phosphorgehalt von 14,1 %. Daraus ergibt sich ein Substitutionsgrad DS_{Phosphat} = 1,52. Der Gehalt an Carbamatgruppen beträgt DS_{Carbamat} = 0, 1. Eine 2%ige wässrige Lösung ist leicht trübe und zeigt mit Poly(dadmac) einen deutlichen Niederschlag.

## Patentansprüche

1. Verfahren zur Herstellung hochsubstituierter Stärkephosphate, bei dem
a) in einem Vorbehandlungsschritt die Stärke in einem Gemisch aus Harnstoff und Wasser aufgelöst wird,
b) das Wasser aus der Lösung von a) unter Erhalt einer modifizierten Stärke entfernt wird und
c) in einem Mischaggregat die modifizierte Stärke mit einem Phosphatierungsmittel in einem lösungsmittelfreien Schritt zum Stärkephosphat thermisch umgesetzt wird.

2. Verfahren nach Anspruch 1,
**dadurch gekennzeichnet, dass** das Harnstoff-Wasser-Gemisch von 30 bis 60 Gew.-%, insbesondere von 45 bis 55 Gew.-% Harnstoff enthält.

3. Verfahren nach einem der vorhergehenden Ansprüche,
**dadurch gekennzeichnet, dass** das Wasser in Schritt b) durch azeotrope Destillation entfernt wird.

4. Verfahren nach einem der vorhergehenden Ansprüche,
**dadurch gekennzeichnet, dass** in Schritt c) die modifizierte Stärke zu einer Schmelze des Phosphatierungsmittels gegeben wird.

5. Verfahren nach einem der Ansprüche 1 bis 3,
**dadurch gekennzeichnet, dass** in Schritt c) modifizierte Stärke und Phosphatierungsmittel bei Raumtemperatur gemischt werden und anschließend auf Temperaturen von 100 bis 150 °C aufgeheizt werden.

6. Verfahren nach einem der vorhergehenden Ansprüche,
**dadurch gekennzeichnet, dass** als Phosphatierungsmittel Phosphatsalze eingesetzt werden.

7. Verfahren nach dem vorhergehenden Anspruch,
**dadurch gekennzeichnet, dass** als Phosphatierungsmittel Phosphorsäure und/oder Harnstoffphosphat eingesetzt wird.

8. Verfahren nach einem der vorhergehenden Ansprüche,
**dadurch gekennzeichnet, dass** das Mischaggregat ein Kneter ist.

9. Verwendung des Verfahrens gemäß einem der Ansprüche 1 bis 8 zur Herstellung von Additiven für mineralischen oder dispersionsgebundenen Baustoffsysteme.

10. Verwendung des Verfahrens gemäß einem der Ansprüche 1 bis 8 zur Herstellung von Additiven für die Pharmazie oder Kosmetik.

11. Verwendung des Verfahrens gemäß einem der Ansprüche 1 bis 8 zur Herstellung von anionischen Komponenten für Polyelektrolytkomplexe.

12. Verwendung des Verfahrens gemäß einem der Ansprüche 1 bis 8 zur Herstellung von Trägermaterial, insbesondere für die Landwirtschaft.

13. Verwendung des Verfahrens gemäß einem der Ansprüche 1 bis 8 zur Herstellung von Additiven zum Binden von Wasser.

## Claims

1. Method for the production of highly substituted starch phosphates, in which
a) in a pretreatment step, the starch is dissolved in a mixture of urea and water,
b) the water is removed from the solution of a), a modified starch being obtained, and
c) the modified starch is converted thermally in a mixing unit with a phosphating agent in a solvent-free step to form starch phosphate.

2. Method according to claim 1,
**characterised in that** the urea-water mixture comprises from 30 to 60% by weight, in particular from 45 to 55% by weight, of urea.

3. Method according to one of the preceding claims,
**characterised in that** the water is removed in step b) by azeotropic distillation.

4. Method according to one of the preceding claims,
**characterised in that**, in step c), the modified starch is added to a melt of the phosphating agent.

5. Method according to one of the claims 1 to 3,
**characterised in that**, in step c), modified starch and phosphating agent are mixed at room temperature and subsequently are heated to temperatures of 100 to 150°C.

6. Method according to one of the preceding claims,
**characterised in that** phosphate salts are used as phosphating agent.

7. Method according to the preceding claim,
**characterised in that** phosphoric acid and/or urea phosphate is used as phosphating agent.

8. Method according to one of the preceding claims,
**characterised in that** the mixing unit is a kneader.

9. Use of the method according to one of the claims 1 to 8 for the production of additives for mineral or dispersion-bonded construction material systems.

10. Use of the method according to one of the claims 1 to 8 for the production of additives for pharmaceutics or cosmetics.

11. Use of the method according to one of the claims 1 to 8 for the production of anionic components for polyelectrolyte complexes.

12. Use of the method according to one of the claims 1 to 8 for the production of carrier material, in particular for agriculture.

13. Use of the method according to one of the claims 1 to 8 for the production of additives for binding water.

## Revendications

1. Procédé de fabrication de phosphates d'amidon hautement substitués, dans lequel,
a) dans une étape de prétraitement, l'amidon est dissous dans un mélange d'urée et d'eau,
b) l'eau est éliminée de la solution de a) pour obtenir un amidon modifié et,
c) dans un mélangeur, l'amidon modifié est transformé thermiquement avec un agent de phosphatation, dans une étape sans solvant, pour donner le phosphate d'amidon.

2. Procédé selon la revendication 1,
**caractérisé en ce que** le mélange d'urée et d'eau contient 30 à 60 % en poids, en particulier 45 à 55 % en poids d'urée.

3. Procédé selon l'une quelconque des revendications précédentes,
**caractérisé en ce que** l'eau est éliminée à l'étape b) par distillation azéotropique.

4. Procédé selon l'une quelconque des revendications précédentes, **caractérisé en ce qu'**à l'étape c), l'amidon modifié est ajouté à une masse fondue de l'agent de phosphatation.

5. Procédé selon l'une quelconque des revendications 1 à 3,
**caractérisé en ce qu'**à l'étape c), on mélange l'amidon modifié et l'agent de phosphatation à température ambiante, puis on chauffe ensuite à des températures de 100 à 150 °C.

6. Procédé selon l'une quelconque des revendications précédentes,
**caractérisé en ce que** l'on utilise comme agent de phosphatation des sels de phosphates.

7. Procédé selon la revendication précédente,
**caractérisé en ce que** l'on utilise comme agent de phosphatation de l'acide phosphorique et/ou du phosphate d'urée.

8. Procédé selon l'une quelconque des revendications précédentes,
**caractérisé en ce que** le mélangeur est un malaxeur.

9. Utilisation du procédé selon l'une quelconque des revendications 1 à 8 pour produire des additifs pour systèmes de matériaux minéraux ou liés en dispersion.

10. Utilisation du procédé selon l'une quelconque des revendications 1 à 8 pour produire des additifs pour usage pharmaceutique ou cosmétique.

11. Utilisation du procédé selon l'une quelconque des revendications 1 à 8 pour produire des composants anioniques pour complexes de polyélectrolytes.

12. Utilisation du procédé selon l'une quelconque des revendications 1 à 8 pour produire des substrats, en particulier pour l'agriculture.

13. Utilisation du procédé selon l'une quelconque des revendications 1 à 8 pour produire des additifs liant l'eau.
